# EUROPÄISCHE PATENTANMELDUNG

(11) **EP 0 680 686 A1**
(43) Veröffentlichungstag der Anmeldung: **08.11.1995**
(21) Anmeldenummer: 95106143.1
(22) Anmeldetag: 25.04.1995
(51) Int. Cl.: A01C 5/06, A01B 29/06, B60S 1/68

(54) **Abstreifer für das die Furchentiefe bestimmende Andrückrad einer Sämaschine**

(30) Priorität: 02.05.1994 US 236315
(71) Anmelder: DEERE & COMPANY, Moline, Illinois 61265 (US)
(72) Erfinder: Clark, Richard H., Geneseo, Illinois 61254 (US); Gray, Steven G., Lynn Center, Illinois 61262 (US); Long, John David, Ankeny, Iowa 50021 (US)
(74) Vertreter: Feldmann, Bernhard

(57) **Zusammenfassung**

Ein Abstreifer (32) für ein die Furchentiefe bestimmendes Andrückrad (22) einer Sämaschine mit wenigstens einer einen Furchenöffner (20) aufweisenden Reiheneinheit (12), wobei das Andrückrad (22) an einem Schwenkarm (24) angeordnet ist und um eine Achse umläuft und wobei der Abstreifer (32) an einer mit dem Schwenkarm (24) verbundenen Stütze (34) derart angeordnet ist, daß die äußere Lauffläche des Andrückrades von Fremdmaterial befreit wird, ist als drehbares Abstreiferrad (36) mit Abstreiferkanten ausgebildet.

## Beschreibung

Die Erfindung bezieht sich im weitesten Sinn auf einen Abstreifer für das die Furchentiefe bestimmende Andrückrad einer Sämaschine, der an einer mit dem Andrückrad mittel- oder unmittelbar verbindbaren Stütze angeordnet ist und im angebauten Zustand die äußere Lauffläche des Andrückrades von Fremdmaterial befreit oder auf einen Abstreifer in Kombination mit einem die Furchentiefe bestimmenden Andrückrad einer Sämaschine mit wenigstens einer einen Furchenöffner aufweisenden Reiheneinheit, wobei das Andrückrad an einem Schwenkarm angeordnet ist und um eine Achse umläuft und wobei der Abstreifer an einer mit dem Schwenkarm verbundenen Stütze derart angeordnet ist, daß die äußere Lauffläche des Andrückrades von Fremdmaterial befreit wird.

In der Landwirtschaft einsetzbare Sämaschinen, insbesondere Einzelkornsämaschinen sind mit einer Reihe von nebeneinander angeordneten Reiheneinheiten versehen, die jeweils einen Sammelbehälter für Saatgut, einen Furchenöffner zum Ziehen einer Saatrille und eine Einrichtung zum Schließen der Saatrille aufweisen, nachdem Saatgut in der Saatrille abgelegt wurde. Bei Einzelkornsämaschinen ist es von ausschlaggebender Bedeutung, daß das Saatgut einzeln und in gleichen Abständen und in gleicher Tiefe abgelegt wird. Je nach Saatgut variiert die Pflanztiefe, die über auf dem Boden neben der Saatrille oder -furche ablaufende Räder bestimmt wird. Derartige Räder werden als Press- und/oder als Andrückräder bezeichnet und steuern den Furchenöffner entsprechend. Sie können neben dem Furchenöffner, der in der Regel aus umlaufenden in den Boden schneidenden Scheiben besteht, oder unmittelbar hinter dem Furchenöffner angeordnet sein (US-A-5 269 380 bzw. US-A-5 081 942). Wenn sich nun an der Lauffläche der Press- und/oder Andrückräder Fremdkörper, wie lehmiger Ackerboden oder Pflanzenrückstände festsetzen, ändert sich deren wirksamer Durchmesser und damit die Pflanztiefe, was äußerst unerwünscht ist.

Um dies zu verhindern, wurde bereits der eingangs erwähnte Abstreifer vorgeschlagen (US-A-5 269 380). Dieser besteht aus einem messerähnlichen Blech, das die Oberfläche der Andrückräder abkratzen soll. Diese Methode hat sich allerdings als nicht zufriedenstellend herausgestellt, da das Blech dazu tendiert, die Rollbewegung des Andrückrades zu bremsen oder gar zu blockieren. Das Rad schleift dann über den Boden und verliert seine Steuerfunktion. Eine richtige Saatgutablage wird beeinträchtigt.

Um das Ansammeln von Erdreich an der Außenseite einer Scheibe zu verhindern, wurde bereits ein umlaufender Abstreifer mit einem Verschleißring vorgeschlagen (US-A-4 603 746).

Die mit der Erfindung zu lösende Aufgabe wird darin gesehen, den Abstreifer derart auszubilden, daß die gewünschte Saatgutablage nicht behindert wird. Die Erfindung sieht deshalb vor, daß der Abstreifer als drehbares Abstreiferrad mit Abstreiferkanten ausgebildet ist. Auf diese Weise wird der Abstreifer in Drehung versetzt, wenn er mit Fremdkörpern in Berührung kommt, wobei die Abstreiferkanten die Fremdkörper entfernen. Derartige Abstreifer sind einfach und kostengünstig herzustellen.

Im eingebauten Zustand läßt sich nach einem weiteren Vorschlag der Erfindung eine besonders gute Reinigung erzielen, wenn die Drehachse des Abstreiferrades nicht parallel zu der Drehachse des Andrückrades verläuft. Das Abstreiferrad läuft dann "schräg" auf dem Andrückrad und fegt das Fremdmaterial seitlich neben das Andrückrad.

Im einzelnen kann das Abstreiferrad mit einer Vielzahl von sich radial oder im wesentlichen radial erstreckenden Paddeln versehen sein, deren außenliegende Kanten die Abstreiferkanten bilden. Im Rahmen der Erfindung können auch die außenliegenden Enden der Paddel mit entsprechenden Abstreiferkanten versehen sein.

Vorgeschlagen wird ferner, daß die Drehachse des Abstreiferrades oberhalb und rückwärtig der Drehachse des Andrückrades angeordnet ist, wodurch das Abstreiferrad durch das Fremdmaterial leicht in Drehung versetzt werden kann.

Für ein einfaches seitliches Abkehren können die Abstreiferkanten parallel oder im wesentlichen parallel zu der Drehachse des Abstreiferrades angeordnet sein, wobei die Drehachse des Abstreiferrades horizontal und in einem Winkel zwischen 15° und 30° zu einer horizontalen Querachse angeordnet ist.

In der Zeichnung ist ein nachfolgend näher erläutertes Ausführungsbeispiel der Erfindung dargestellt. Es zeigt:
- Fig. 1: eine Reiheneinheit einer Einzelkornsämaschine mit einem drehbaren Abstreiferrad,
- Fig. 2: das Abstreiferrad in Blickrichtung der Pfeile 2:2 in Fig. 1 und
- Fig. 3: einen Schnitt nach der Linie 3:3 in Fig. 1.

Die Erfindung findet bevorzugt bei Einzelkornsämaschinen Verwendung. Einzelkornsämaschinen werden in der Landwirtschaft eingesetzt und legen Saatgut einzeln, im gleichen Abstand und in gleicher Tiefe in einer Saatfurche oder -rille ab, die zuvor gezogen wurde. Nach der Ablage wird das Saatgut mit Erdreich zugedeckt bzw. die Furche wird zugeschüttet und verfestigt. Einzelkornsämaschinen können eine beträchtliche Arbeitsbreite aufweisen und werden im Einsatz von einem Traktor über den Acker gezogen. Der Acker kann entsprechend vorbereitet sein, oder auch nicht, wenn es sich um ein sogenanntes Direktsaatverfahren handelt. In jedem Fall muß aber damit gerechnet werden, daß der Ackerboden naß und lehmig sein kann.

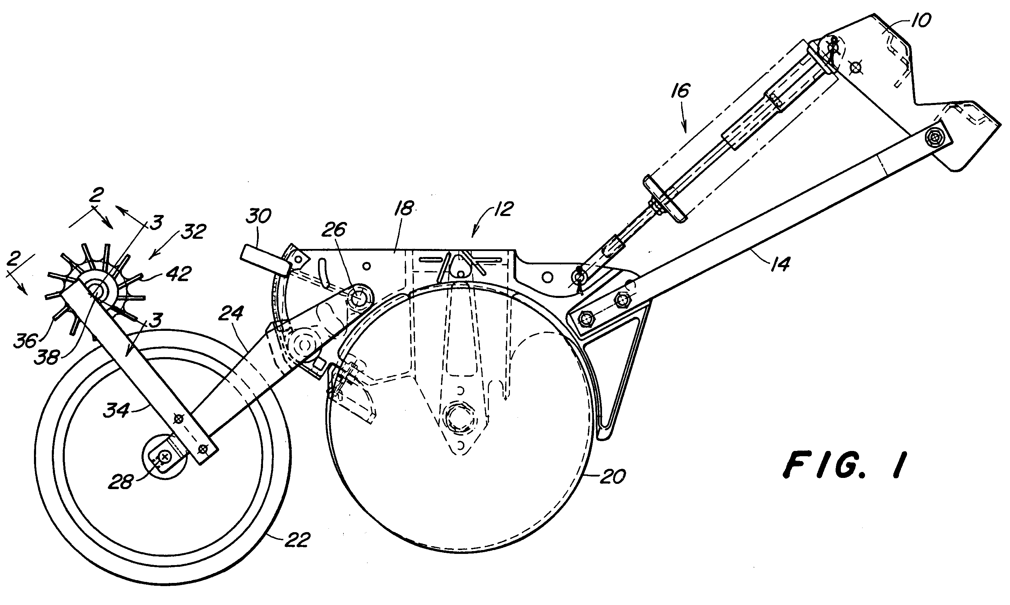

In Fig. 1 der Zeichnung ist ein Grundrahmen 10 einer solchen Einzelkornsämaschine auszugsweise erkennbar. Der Grundrahmen 10 verläuft quer zur Arbeitsrichtung und nimmt eine Vielzahl von nebeneinander angeordneten Reiheneinheiten 12 auf. Eine einzige Reiheneinheit 12 ist in Fig. 1 schematisch dargestellt. Für eine mehr ins Detail gehende Beschreibung derartiger Einzelkornsämaschinen wird auf das Dokument US-A-5 065 681 verwiesen. Die Reiheneinheiten 12, die jeweils eine Saatreihe legen, sind über ein Gestänge 14 an den Grundrahmen 10 vertikal schwenkbar angeschlossen. Damit ein gewünschter Bodendruck entsteht, ist noch eine Andrückvorrichtung 16 vorgesehen, die parallel zu dem Gestänge 14 verläuft und den nach unten gerichteten Druck steuert. Auch dieses Detail ist im vorgenannten Dokument erläutert.

Jede Reiheneinheit 12 hat einen Rahmen 18, der einen Furchenöffner 20 trägt, der im vorliegenden Fall aus zwei leicht nach rückwärts divergierenden Scheiben besteht, die im Einsatz in den Boden eindringen und bei einem Vorwärtsfahren der Maschine eine Furche in den Boden schneiden. Über ein nicht dargestelltes Saatgutaustragssystem wird im Bereich der rückwärtigen Enden der Scheiben Saatgut in die Furche abgelegt. Zu diesem System gehört eine Dosiereinrichtung, die das Saatgut einem Sammelbehälter entnimmt, so daß das Saatgut einzeln, in gleichen Abständen und in gleicher Tiefe in der Furche abgelegt werden kann.

Ein kombiniertes Press- und Andrückrad 22 ist rückwärtig des Furchenöffners 20 angeordnet und dient dazu, das Erdreich um die abgelegte Saat zu verfestigen, die Saat mit Erdreich zu bedecken und den Furchenöffner 20 derart zu steuern, daß seine Scheiben in einer ganz bestimmten Tiefe eindringen, d. h. die Tiefenablage des Saatgutes wird durch das Press- und Andrückrad bestimmt. Gleichzeitig können die Press- und Andrückräder so angeordnet werden, daß sie an den umlaufenden Scheiben des Furchenöffners eventuell anhaftendes Erdreich abstreifen. Das Press- und Andrückrad muß im Rahmen der Erfindung auch nicht unbedingt kombiniert sein. Wichtig ist jedoch, daß das Pressrad oder das Andrückrad die Tiefenablage des Saatgutes genau bestimmt. Bei dem bevorzugten Ausführungsbeispiel ist die Kombination aus Press- und Andrückrad 22 an den Rahmen 18 über einen nach unten und rückwärts geneigt verlaufenden Lenker 24 angeschlossen, dessen oberes oder vorderes Ende über einen Querzapfen 26 an den Rahmen angelenkt ist, während sein unteres oder rückwärtiges Ende mit einer Querwelle 28 ausgestattet ist, auf der das Press- und Andrückrad 22 drehbar gelagert ist. In der in Fig. 1 gezeigten Stellung befindet sich die Reiheneinheit 12 in ihrer Transportstellung, in der der Furchenöffner 20 und das Press- und Andrückrad keine Bodenberührung haben. Für einen Einsatz wird die Reiheneinheit 12 auf den Boden abgesenkt, wobei das Press- und Andrückrad 22 um den Querzapfen 26 nach oben schwenkt, bis daß der Schwenkarm 24 gegen einen einstellbaren Anschlag 30 zur Anlage kommt. Die Stellung des Anschlages 30 bestimmt die unterste Position der Scheiben des Furchenöffners, da das Rad 22 auf der Bodenoberfläche abläuft. Wie die Tiefeneinstellvorrichtung im einzelnen ausgebildet ist, kann dem Dokument US-A-5 081 942 entnommen werden.

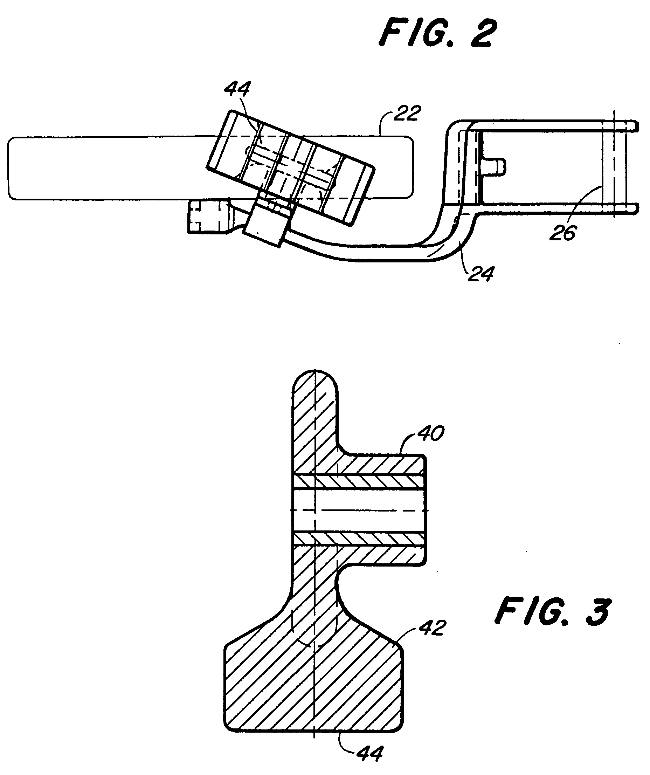

Da die Abhängigkeit des Furchenöffners von dem Andrückrad 22 die Eindringtiefe der Scheiben oder die Pflanztiefe bestimmt, kommt dem äußeren Durchmesser des Andrückrades 22 eine besondere Bedeutung zu. Dieser muß konstant sein und soll es im Einsatz auch bleiben, was nicht der Fall ist, wenn sich bei ungünstigen Bodenverhältnissen an der Lauffläche des Andrückrades 22 Erdreich oder Pflanzenrückstände festsetzen. Um dies zu verhindern, ist dem Andrück- und Pressrad 22 ein Abstreifer 32 zugeordnet, der die äußere Lauffläche des Andrückrades 22 in dessen oberen Bereich von Erdreich oder Pflanzenrückständen befreit. Der Abstreifer 32 hat eine im wesentlichen vertikal gerichtete Stütze 34, deren unteres Ende mit dem Schwenkarm 24 für das Andrückrad verspannt oder sonstwie verbunden ist, und zwar an einer Stelle, die unmittelbar vor der Querwelle 28 liegt. Von dem Schwenkarm 24 aus gesehen, erstreckt sich die Stütze 24 nach rückwärts und oben und nimmt an ihrem oberen Ende ein paddelförmig ausgebildetes Abstreiferrad 36 mittels einer Welle 38 drehbar auf. Aus Fig. 2 ist erkennbar, daß die Achse der Welle 38 zu der Querwelle 28 des Andrückrades 22 nicht parallel verläuft, sondern mit Bezug auf diese in einem spitzen Winkel angeordnet ist, der beim Ausführungsbeispiel etwa 22,5° beträgt.

Das Abstreiferrad 36 selbst besteht aus einer Nabe 40 mit einer Anzahl von radial gerichteten Paddeln 42, die sich von der Nabe 40 aus gesehen nach außen erstrecken. Die einzelnen Paddel 42 weisen, wie aus Fig. 1 zu ersehen ist, zueinander gleichen Abstand auf, sind allerdings nicht exakt radial gerichtet. Bei dem bevorzugten Ausführungsbeispiel sind an der Nabe 40 zwölf Paddel 42 vorgesehen. Jeder Paddel 42 hat eine äußere Kante 44, die bei einem Umlauf des Abstreiferrades die äußere Lauffläche des Andrückrades 22 bestreichen oder zu dieser einen geringfügigen Abstand aufweisen. Jede äußere Kante 44 verläuft, wie aus Fig. 2 zu erkennen ist, parallel oder etwa parallel zu der Lagerwelle 38 des Abstreiferrades 36 und damit in einem Winkel zu der Drehachse des Andrückrades 22. In jedem Fall ist die Zuordnung von Abstreiferrad 36 zu dem Andrückrad 22 derart, daß das Abstreiferrad 36 durch an der äußeren Peripherie des Andrückrades anhaftendes Erdreich oder anderes Material in Drehung versetzt wird, wobei diese Drehung dazu genutzt wird, daß die dann sich bewegenden Paddel 42 das Fremdmaterial von der Lauffläche des Andrückrades entfernen. Die Lauffläche bleibt entsprechend sauber, und infolge des drehbar angeordneten Abstreiferrades wird auch die Drehbewegung des Andrückrades nicht gebremst oder sogar blockiert.

## Patentansprüche

1. Abstreifer für das die Furchentiefe bestimmende Andrückrad (22) einer Sämaschine, der an einer mit dem Andrückrad (22) mittel- oder unmittelbar verbindbaren Stütze (34) angeordnet ist und im angebauten Zustand die äußere Lauffläche des Andrückrades (22) von Fremdmaterial befreit, dadurch gekennzeichnet, daß der Abstreifer (32) als drehbares Abstreiferrad (36) mit Abstreiferkanten ausgebildet ist, die an seinem Umfang vorgesehen sind.

2. Abstreifer nach Anspruch 1, dadurch gekennzeichnet, daß die Abstreiferkanten als die äußeren Kanten (44) von mit dem Abstreiferrad (36) verbundenen Paddeln (42) ausgebildet sind.

3. Abstreifer in Kombination mit einem die Furchentiefe bestimmenden Andrückrad (22) einer Sämaschine mit wenigstens einer einen Furchenöffner (20) aufweisenden Reiheneinheit (12), wobei das Andrückrad (22) an einem Schwenkarm (24) angeordnet ist und um eine Achse umläuft und wobei der Abstreifer (32) an einer mit dem Schwenkarm (24) verbundenen Stütze (34) derart angeordnet ist, daß die äußere Lauffläche des Andrückrades von Fremdmaterial befreit wird, dadurch gekennzeichnet, daß der Abstreifer (32) als drehbares Abstreiferrad (36) mit Abstreiferkanten ausgebildet ist, die an seinem Umfang vorgesehen sind.

4. Abstreifer nach Anspruch 3, dadurch gekennzeichnet, daß die Drehachse des Abstreiferrades (36) nicht parallel zu der Drehachse des Andrückrades (22) verläuft.

5. Abstreifer nach Anspruch 3, dadurch gekennzeichnet, daß das Abstreiferrad (36) mit einer Vielzahl von sich radial oder im wesentlichen radial erstreckenden Paddeln (42) versehen ist, deren außenliegende Enden (44) die Abstreiferkanten bilden.

6. Abstreifer nach einem oder mehreren der Ansprüche 3 bis 5, dadurch gekennzeichnet, daß die Drehachse des Abstreiferrades (36) oberhalb und rückwärtig der Drehachse des Andrückrades (22) angeordnet ist.

7. Abstreifer nach Anspruch 3 und/oder 5, dadurch gekennzeichnet, daß die Abstreiferkanten parallel oder im wesentlichen parallel zu der Drehachse des Abstreiferrades (36) angeordnet sind.

8. Abstreifer nach Anspruch 4, dadurch gekennzeichnet, daß die Drehachse des Abstreiferrades (36) horizontal oder etwa horizontal und in einem Winkel zwischen 15° und 30° zu einer horizontalen Querachse angeordnet ist.
